# EUROPEAN PATENT APPLICATION

(11) **EP 1 520 812 A1**
(43) Date of publication of application: **06.04.2005**
(21) Application number: 04104839.8
(22) Date of filing: 01.10.2004
(51) Int. Cl.: B65G 47/51, B65G 43/00

(54) **Variable-capacity store**

(30) Priority: 03.10.2003 IT BO20030571
(71) Applicant: G.D Societa' Per Azioni, 40133 Bologna (IT)
(72) Inventor: Spatafora, Mario, 40057 Granarolo (IT)
(74) Representative: Jorio, Paolo, Dr. Ing.

(57) **Abstract**

A variable-capacity store (1) having an endless belt conveyor (5), in turn having a conveying branch (8) and a return branch (11); an adjusting assembly (12) for adjusting the lengths of the conveying branch (8) and the return branch (11) in complementary manner; and at least one actuating device (37;38) for transmitting a force to the belt conveyor (5) to move the belt conveyor (5), and having a limiting device for limiting the maximum value of the force transmitted to the belt conveyor (5) using a maximum threshold value established as a function of the fill level of the store (1).

## Description

The present invention relates to a variable-capacity store.

The present invention may be used to advantage in a variable-capacity store for cigarettes, to which the following description refers purely by way of example.

In cigarette packing, a variable-capacity cigarette store is interposed between a cigarette manufacturing machine and a packing machine to compensate for any difference in the number of cigarettes produced and the number packed.

One example of a FIFO variable-capacity cigarette store (First In First Out, i.e. the first cigarette into the store is also the first out) is described in Patent EP-0738478-B1, Patent US-5413213-A1, Patent Application WO-9944446-A1 or Patent Application WO-03026988-A1. A store of the type described in the above documents comprises an input station and an output station arranged in series along a cigarette feed path; an endless conveyor belt having a conveying branch and a return branch; and an adjusting device for adjusting the lengths of the conveying and return branches in complementary manner. The conveyor belt is driven by at least one electric motor to feed the cigarettes along the conveying branch, and engages a series of fixed guides for keeping the conveyor belt in the desired position.

Cigarette stores of the above type have been found to be subject to relatively frequent breakage of the conveyor belt. One attempt to solve the problem has been to limit the maximum torque transmitted to the conveyor belt by the electric motor. Despite this, however, breakage of the conveyor belt still remains a frequent problem, particularly when the store is empty or not very full. Tests have shown breakage to be caused by the considerable length of the return branch when the store is substantially empty, so that the return branch conveyor belt tends to oscillate, thus increasing the likelihood of the conveyor belt jamming in one of the fixed guides along the return branch.

It is an object of the present invention to provide a variable-capacity store designed to eliminate the aforementioned drawbacks, and which, in particular, is cheap and easy to produce.

According to the present invention, there is provided a variable-capacity store as claimed in Claim 1 or 2 and, preferably, in any one of the following Claims depending directly or indirectly on Claim 1.

A non-limiting embodiment of the present invention will be described by way of example with reference to the accompanying drawings, in which:
Figure 1 shows a schematic view in perspective of a preferred embodiment of a variable-capacity store in accordance with the present invention;
Figure 2 shows a view in perspective, with parts removed for clarity, of the Figure 1 store;
Figure 3 shows a larger-scale plan view of a detail of the Figure 1 store;
Figure 4 shows a larger-scale front section of the Figure 1 store;
Figure 5 shows a side view, with further parts removed for clarity, of the Figure 1 store;
Figure 6 shows a schematic, partly sectioned side view of an actuating device of the Figure 1 store;
Figure 7 shows a plan view of a detail of the Figure 6 actuating device;
Figure 8 shows a graph showing the correlation between two control quantities of the Figure 1 store.

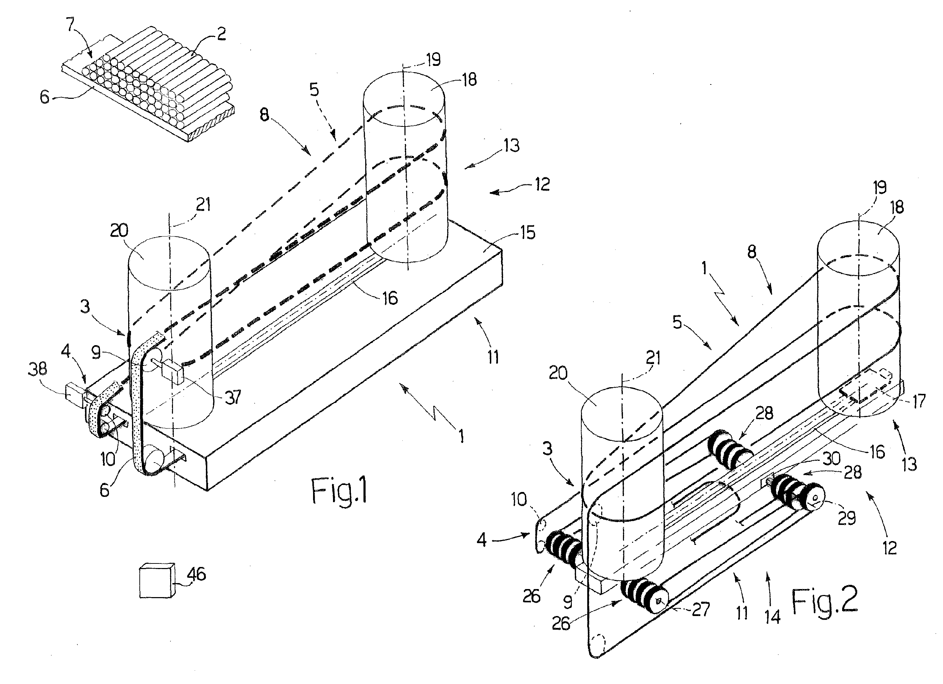

Number 1 in Figure 1 indicates as a whole a variable-capacity store for cigarettes 2, comprising an input station 3 and an output station 4 for cigarettes 2, and wherein input station 3 and output station 4 are arranged in series along a feed path of cigarettes 2. More specifically, store 1 is a FIFO variable-capacity cigarette store, i.e. stores a number of cigarettes 2 varying as required within a given range, and feeds to output station 4 the cigarettes 2 first entering store 1 at input station 3.

Store 1 receives a mass of cigarettes 2, arranged in bulk in a continuous stream, from an input conveyor (not shown) located at input station 3 and connected to the output of a manufacturing machine (not shown), and feeds cigarettes 2 to an output conveyor (not shown) located at output station 4 and connected to the input of a packing machine (not shown).

Store 1 comprises an endless conveyor 5 which is defined by an endless belt 6 having a substantially rectangular section and two opposite major lateral surfaces, one of which is a conveying surface 7 for supporting cigarettes 2 as they travel through store 1. Conveyor 5 comprises a conveying branch 8 which, together with the input and output conveyors, defines the feed path of cigarettes 2 between the manufacturing and packing machines, extends from an input pulley 9 at input station 3 to an output pulley 10 at output station 4, and conveys cigarettes 2 from input station 3 to output station 4. Conveyor 5 also comprises a return branch 11 extending from output pulley 10 to input pulley 9.

Store 1 also comprises an adjusting assembly 12 for adjusting the length of conveying branch 8 and the length of return branch 11 in complementary manner to adjust the capacity of conveyor 5 within store 1, and which comprises an adjusting device 13 associated with conveying branch 8, and a compensating device 14 associated with return branch 11.

Adjusting device 13 comprises a fixed frame defined by a parallelepiped-shaped box body 15, the top surface of which is fitted with a straight guide 16 extending between input and output stations 3 and 4, and on which runs a slide 17 supporting a movable drum 18 with a vertical axis 19. Straight guide 16 also supports a fixed drum 20 which is connected rigidly to straight guide 16, has a vertical axis 21, and is located close to input station 3.

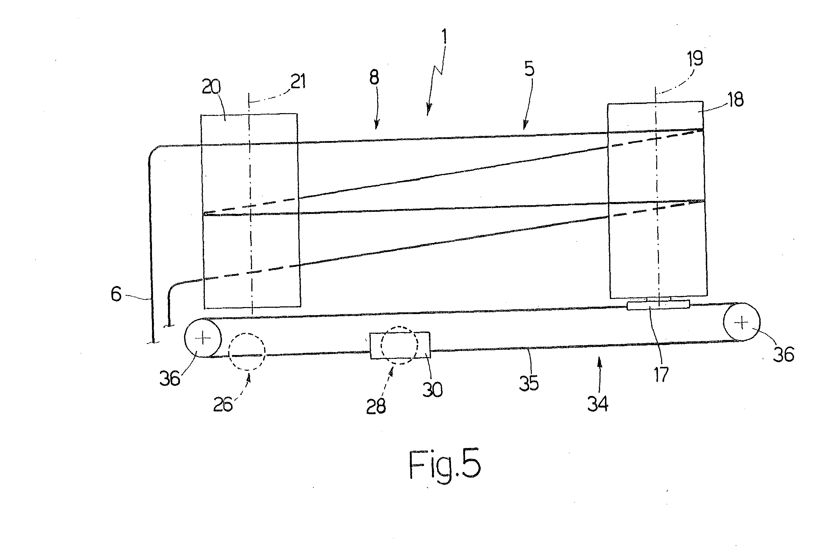

As shown in Figure 4, each drum 18, 20 comprises a vertical, angularly fixed, central shaft 22 fitted with equally spaced pulleys 23; and each pulley 23 comprises a central hub 24 fitted idly and in axially-fixed manner to shaft 22, and an outer rim 25 coaxial with shaft 22 and relative hub 24, and for supporting belt 6.

Compensating device 14 is housed entirely inside box body 15, beneath adjusting device 13. More specifically, as shown in Figure 2, compensating device 14 comprises two coaxial fixed drums 26 having respective horizontal axes 27 and connected rigidly to guide 16 at fixed drum 20; and two coaxial movable drums 28 having respective horizontal axes 29 and fitted to a slide 30 which runs along a bottom portion of guide 16. More specifically, straight guide 16 is defined by a square box section (shown more clearly in Figure 4), a top portion of which supports drum 20, and drum 18 by means of slide 17, and a bottom portion of which supports fixed drums 26 in a fixed position, and movable drums 28 by means of slide 30.

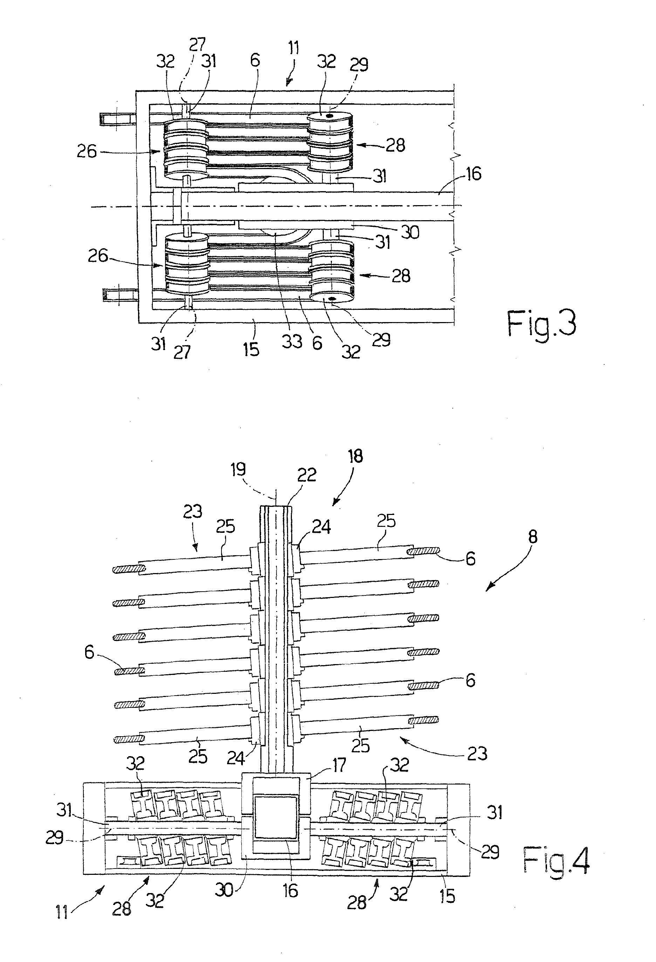

As shown in Figures 3 and 4, drums 26 and 28 are located on opposite sides of guide 16, with respective axes 27 and 29 perpendicular to guide 16; and each drum 26, 28 comprises a shaft 31, and a number of pulleys 32 which are equally spaced along shaft 31, are fitted idly to shaft 31, and have respective outer grooves of a width approximately equal to but no smaller than the width of belt 6. In addition to the two movable drums 28, slide 30 also supports a pulley 33 fitted idly astride guide 16 to rotate freely about a vertical axis, and for allowing passage of belt 6 from the movable drum 28 on one side of guide 16 to the movable drum 28 on the other side of guide 16. More specifically, passage of belt 6 from the movable drum 28 on one side of guide 16 to the movable drum 28 on the other side of guide 16 is made possible by belt 6 being wound on edge about pulley 33.

As shown in Figure 5, slide 17 supporting movable drum 18, and slide 30 supporting movable drums 28 are connected mechanically by a connecting device 34 designed so that each movement of slide 17 corresponds to an identical movement of slide 30 in the opposite direction. More specifically, connecting device 34 comprises an endless belt 35 looped about two end pulleys 36 fitted idly to box body 15 to rotate freely about respective horizontal axes; and slide 17 and slide 30 are connected mechanically to belt 35, so that each movement of slide 17 corresponds to an identical movement of slide 30 in the opposite direction.

As shown in Figure 1, input pulley 9 is rotated about a respective horizontal axis by an actuating device 37 to drive belt 6 at input station 3, and output pulley 10 is rotated about a respective horizontal axis by an actuating device 38, substantially identical with actuating device 37, to drive belt 6 at output station 4.

Along conveying branch 8 of conveyor 5, belt 6 coils downwards about the two drums 18 and 20 to form a vertical spiral, each turn of which is supported by two corresponding pulleys 23. Along conveying branch 8, belt 6 is positioned with conveying surface 7 facing upwards, and, along the coil, is positioned on edge with respect to drums 18 and 20, and rests flat on rims 25 of pulleys 23. Along return branch 11 of conveyor 5, belt 6 coils about drums 26 and 28 to form a horizontal spiral, each turn of which is supported by two corresponding pulleys 32.

In actual use, cigarettes 2 are fed continuously onto conveying branch 8 of conveyor 5 at input station 3, and are fed by conveying branch 8 to output station 4, where the first cigarettes entering store 1 are fed out of store 1.

In normal operating conditions, the number of cigarettes 2 fed to input station 3 equals the number of cigarettes 2 fed to output station 4 by conveyor 5, so that the speed imparted to belt 6 by actuating device 37 at input station 3 equals the speed imparted to belt 6 by actuating device 38 at output station 4, and the distance between drums 18 and 20 remains unchanged.

When the number of cigarettes 2 fed to input station 3 is greater than the number of cigarettes 2 absorbed at output station 4, the speed imparted to belt 6 by actuating device 37 at input station 3 is greater than the speed imparted to belt 6 by actuating device 38 at output station 4, so that movable drum 18 moves away from fixed drum 20 to increase the length of conveying branch 8; and, to compensate for the increase in the length of conveying branch 8, movable drums 28 move towards fixed drums 26 to make a complementary reduction in the length of return branch 11. In other words, when the number of cigarettes 2 fed to input station 3 is greater than the number of cigarettes 2 absorbed at output station 4, input pulley 9 imparts to belt 6 a speed greater than the speed imparted to belt 6 by output pulley 10, so that movable drums 28 on slide 30 are drawn towards fixed drums 26, thus reducing the length of return branch 11. By virtue of connecting device 34, each movement of slide 30 corresponds to an equal opposite movement of slide 17, which increases the distance between movable drum 18 and fixed drum 20, and so increases the length of conveying branch 8 to compensate for the reduction in the length of return branch 11.

Conversely, when the number of cigarettes 2 fed to input station 3 is less than the number of cigarettes 2 absorbed at output station 4, the speed imparted to belt 6 by actuating device 37 at input station 3 is lower than the speed imparted to belt 6 by actuating device 38 at output station 4, so that movable drum 18 moves towards fixed drum 20 to reduce the length of conveying branch 8; and, to compensate for the reduction in the length of conveying branch 8, movable drums 28 move away from fixed drums 26 to make a complementary increase in the length of return branch 11. In other words, when the number of cigarettes 2 fed to input station 3 is less than the number of cigarettes 2 absorbed at output station 4, input pulley 9 imparts to belt 6 a speed lower than the speed imparted to belt 6 by output pulley 10, so that movable drum 18 on slide 17 is drawn towards fixed drum 20, thus reducing the length of conveying branch 8. By virtue of connecting device 34, each movement of slide 17 corresponds to an equal opposite movement of slide 30, which increases the distance between fixed drums 26 and movable drums 28, and so increases the length of return branch 11 to compensate for the reduction in the length of conveying branch 8.

It is important to note that the lengths of conveying branch 8 and return branch 11 are varied solely by tensioning belt 6 by means of actuating device 37 connected to input pulley 9, and actuating device 38 connected to output pulley 10. Connecting device 34 is accessory, in that, given the structure of conveyor 5, its function of connecting the movement of movable drum 18 (slide 17) to the movement of movable drums 28 (slide 30) is performed automatically anyway in the presence of a speed difference between input pulley 9 and output pulley 10. The sole purpose of connecting device 34 is to assist in connecting the movement of movable drum 18 to the movement of movable drums 28, so that connecting device 34 is optional.

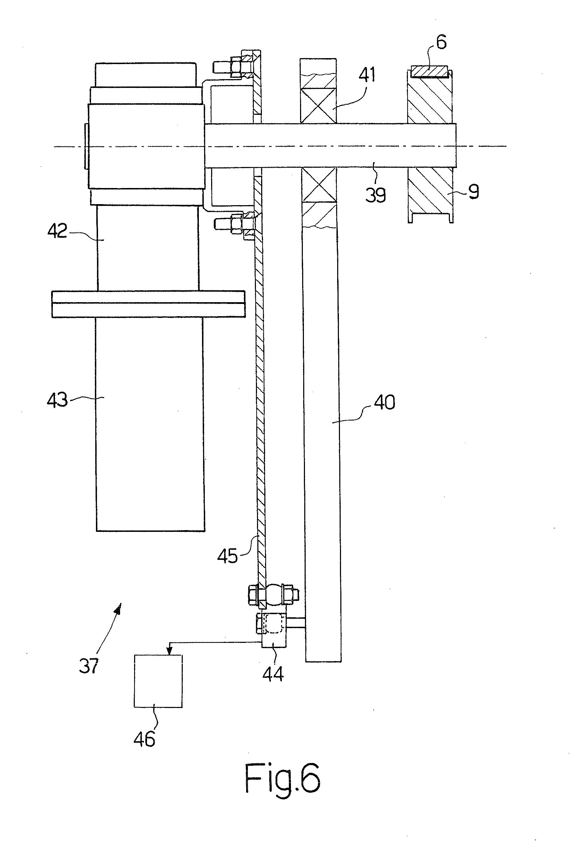

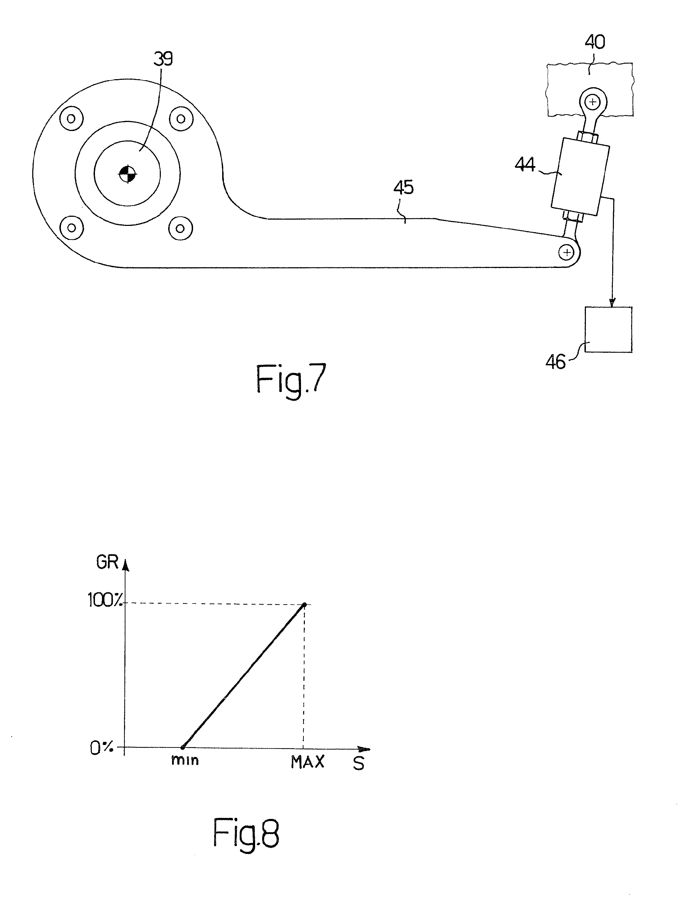

Figures 6 and 7 show details of actuating device 37 for rotating input pulley 9. Since actuating device 38 for rotating output pulley 10 is identical with actuating device 37, the detailed description of actuating device 37 applies to both. Actuating device 37 comprises a shaft 39 supported mechanically, with the interposition of at least one bearing 41, by a frame 40 integral with box body 15; one end of shaft 39 is fitted to pulley 9, and the opposite end of shaft 39 is connected to a mechanical reducer 42 for transmitting motion from an electric motor 43 to shaft 39. Reducer 42 supports electric motor 43, is in turn supported by shaft 39, and is connected mechanically to frame 40 with the interposition of a load cell 44 for real-time measuring the torque transmitted by reducer 42 to shaft 39, and therefore the force transmitted by input pulley 9 to belt 6. More specifically, load cell 44 is connected on one side to frame 40, and on the other side to a transmission member 45 connected rigidly to reducer 42.

Actuating device 37 and actuating device 38 therefore have respective load cells 44 for real-time measuring the torque transmitted to input pulley 9 and output pulley 10 respectively, and therefore, in the absence of slippage between belt 6 and pulleys 9 and 10, the force transmitted to belt 6 by input pulley 9 and output pulley 10 respectively.

In normal operating conditions of store 1, a control unit 46 drives actuating device 37 to move belt 6 at input station 3 at a speed depending on the number of cigarettes 2 supplied to input station 3, i.e. as a function of the number of cigarettes 2 supplied by the manufacturing machine (not shown); and, similarly, control unit 46 drives actuating device 38 to move belt 6 at output station 4 at a speed depending on the number of cigarettes 2 extracted from output station 4, i.e. as a function of the number of cigarettes 2 absorbed by the packing machine (not shown).

To avoid subjecting belt 6 to excessive, potentially damaging mechanical stress, control unit 46 driving actuating devices 37 and 38 limits the maximum force transmitted to belt 6, i.e. limits the maximum torque transmitted to input pulley 9 and output pulley 10. The maximum threshold value S of the force transmitted to belt 6, i.e. the value which must not be exceeded by the force transmitted to belt 6, is not constant, but depends on the fill level GR of store 1. More specifically, a memory in control unit 46 stores a table or mathematical function giving, for each fill level GR of store 1, a corresponding maximum threshold value S of the force transmitted to belt 6.

In actual use, control unit 46 determines the fill level GR of store 1 at a predetermined rate, and accordingly determines the maximum threshold value S of the force transmitted to belt 6; and the maximum threshold value S of the force transmitted to belt 6 is used by control unit 46 when driving actuating devices 37 and 38 to limit the force transmitted to belt 6 to threshold value S.

The table or mathematical function stored in a memory of control unit 46 to give, for each fill level GR of store 1, a corresponding maximum threshold value S of the force transmitted to belt 6, is devised theoretically and/or experimentally, so that each fill level GR of store 1 is assigned a corresponding maximum threshold value S of the force transmitted to belt 6, which is the minimum value necessary for correct operation of store 1.

By way of example, Figure 8 shows one possible correlation between the fill level GR of store 1 (y axis) and the maximum threshold value S of the force transmitted to belt 6 (x axis). As shown clearly in the Figure 8 graph, the maximum threshold value S of the force transmitted to belt 6 varies linearly between a minimum value of other than zero, corresponding to a minimum-load condition of store 1, and a maximum value corresponding to a full or maximum-load condition of store 1. It is important to note that, in actual use, store 1 can never be actually empty of cigarettes 2, since, for obvious physical reasons, the length of conveying branch 8 can never be zeroed.

Control unit 46 determines the fill level GR of store 1 by means of a time analysis of the differences in speed between input pulley and output pulley 10. In other words, time integration of the difference in speed between input pulley 9 and output pulley 10 gives a number directly proportional to the fill level GR of store 1. This substantially amounts to estimating the fill level GR of store 1 as a function of the difference between the number of cigarettes 2 leaving store 1 and the number of cigarettes 2 entering store 1. Alternatively, store 1 may be equipped with a sensor for determining the fill level GR of store 1 as a function of the position of movable drum 18 along guide 16 and, therefore, with respect to fixed drum 20. In other words, the greater the distance is between movable drum 18 and fixed drum 20, the fuller store 1 is.

In an alternative embodiment, as opposed to being measured by load cell 44, the torque transmitted by each reducer 42 to respective shaft 39, and therefore the force transmitted by input pulley 9 or output pulley 10 to belt 6, is determined on the basis of the electric current drawn by relative electric motor 43.

In another embodiment, the force transmitted to belt 6 is real-time measured directly, i.e. by means of sensors, e.g. load cells, fitted directly to belt 6.

Tests have shown store 1 as described above to have a low breakage rate of belt 6 in any operating condition, and particularly when store 1 is empty or poorly filled.

Store 1 as described above may obviously be used for storing articles other than cigarettes 2, such as filter portions, packets of cigarettes, confectionery, or semifinished parts in the manufacturing or metalworking industry.

## Claims

1. A variable-capacity store comprising a belt conveyor (5); adjusting means (12) for adjusting the storage capacity of said belt conveyor (5); and actuating means (37, 38) for transmitting a force to said belt conveyor (5) to move the belt conveyor (5); said actuating means (37, 38) having limiting means (46) for limiting the maximum value of the force transmitted to the belt conveyor (5); and the store (1) being **characterized in that** said limiting means (46) determine a fill level (GR) of the store (1), and establish, as a function of the fill level (GR) of the store (1), the value of a maximum threshold (S) of the force transmitted to the belt conveyor (5).

2. A store as claimed in Claim 2, wherein said belt conveyor (5) is endless, and comprises a conveying branch (8) and a return branch (11); said adjusting means (12) being provided to adjust the lengths of the conveying branch (8) and the return branch (11) in complementary manner.

3. A store as claimed in Claim 1 or 2, wherein the limiting means (46) have sensor means (44) for real-time measuring the value of the force transmitted by the actuating means (37, 38) to the belt conveyor (5).

4. A store as claimed in Claim 3, wherein said belt conveyor (5) comprises a conveyor belt (6), and said sensor means (44) are fitted to said belt (6).

5. A store as claimed in Claim 3 or 4, wherein the limiting means (46) control the actuating means (37, 38) to prevent the value of the force transmitted to the belt conveyor (5) from exceeding the value of the maximum threshold (S).

6. A store as claimed in any one of Claims 1 to 5, wherein the limiting means (46) determine the fill level (GR) of the store (1) as a function of the difference between the number of articles (2) leaving the store (1) and the number of articles (2) entering the store (1).

7. A store as claimed in any one of Claims 1 to 5, wherein a sensor is provided to measure the fill level (GR) of the store (1) , and is connected to the limiting means (46).

8. A store as claimed in one of Claims 1 to 7, wherein a correlation between the fill level (GR) of the store (1) and the value of the maximum threshold (S) of the force transmitted to the belt conveyor (5) is a linear correlation.

9. A store as claimed in Claim 8, wherein the value of the maximum threshold (S) of the force transmitted to the belt conveyor (5) varies linearly between a minimum value of other than zero and corresponding to a minimum-load condition of the store (1), and a maximum value corresponding to the store (1) completely full.

10. A store as claimed in one of Claims 1 to 9, wherein the value of the maximum threshold (S) of the force transmitted to the belt conveyor (5) varies between a minimum value of other than zero and corresponding to a minimum-load condition of the store (1), and a maximum value corresponding to the store (1) completely full.

11. A store as claimed in Claim 2 and any one of Claims 3 to 10, and comprising an input station (3), an input pulley (9) located at the input station (3) and connected to the belt conveyor (5), an output station (4), and an output pulley (10) located at the output station (4) and connected to the belt conveyor (5); the conveying branch (8) extending from the input pulley (9) to the output pulley (10), and the return branch (11) extending from the output pulley (10) to the input pulley (9); and the actuating means (37, 38) comprising a first actuating device (37) connected to the input pulley (9), and a second actuating device (38) connected to the output pulley (10).

12. A store as claimed in Claim 11, wherein the limiting means (46) limit the maximum value of the force transmitted to the belt conveyor (5) by each actuating device (37; 38).

13. A store as claimed in Claim 11 or 12, wherein each actuating device (37; 38) comprises a shaft (39) having one end fitted to the respective pulley (9; 10) and the opposite end connected mechanically to an electric actuator (42, 43) supported mechanically by the shaft (39); the electric actuator (42, 43) being connected to a fixed frame (40) with the interposition of a load cell (44) for real-time measuring the value of the torque transmitted by the electric actuator (42, 43) to the shaft (39).

14. A store as claimed in Claim 13, wherein the load cell (44) is connected on one side to the fixed frame (40), and on the other side to a transmission member (45) connected rigidly to the electric actuator (42, 43).

15. A store as claimed in Claim 11, 12 or 13, and comprising a control unit (46) for driving the first actuating device (37) so as to move the belt conveyor (5) at the input station (3) at a speed depending on the number of articles (2) fed to the input station (3), and for driving the second actuating device (38) so as to move the belt conveyor (5) at the output station (4) at a speed depending on the number of articles (2) extracted from the output station (4).

16. A store as claimed in Claim 2 and any one of Claims 3 to 15, wherein the conveying branch (8) forms at least a first spiral about at least one pair of first drums (18, 20), and the return branch (11) forms at least a second spiral about at least one pair of second drums (26, 28) perpendicular to the first drums (18, 20).
